# EUROPÄISCHE PATENTSCHRIFT

(11) **EP 0 936 138 B1**
(45) Veröffentlichungstag und Bekanntmachung des Hinweises auf die Patenterteilung: **07.05.2003**
(21) Anmeldenummer: 99101994.4
(22) Anmeldetag: 01.02.1999
(51) Int. Cl.: B64C 1/14

(54) **Doppelscheiben-Kabinenfenster für ein Flugzeug**
Double-pane cabin window for an aircraft
Fenêtre à double vitrage pour la cabine d'un aéronef

(30) Priorität: 14.02.1998 DE 19806107
(43) Veröffentlichungstag der Anmeldung: 18.08.1999
(73) Patentinhaber: Airbus Deutschland GmbH, 21129 Hamburg (DE)
(72) Erfinder: Müller, Rainer, Dipl.-Ing., 21224 Rosengarten (DE); Uhlemann, Sven, DIpl.-Ing., 25436 Uetersen (DE); Scherer, Thomas, Dr.-Ing., 22559 Hamburg (DE)
(74) Vertreter: Hansmann, Dierk, Dipl.-Ing.

(56) Entgegenhaltungen:
- EP-A- 0 846 615
- EP-A- 0 846 616
- US-A- 2 332 060

## Beschreibung

Die Erfindung bezieht sich auf ein Doppelscheiben-Kabinenfenster für ein Flugzeug gemäß dem Oberbegriff des Anspruches 1. Mit ihm wird während des Fluges keine Beeinträchtigung der Sichtverhältnisse durch beschlagene Kabinenfensterscheiben eintreten.

Die gegenwärtig eingesetzten Kabinenfenster im Passagier-Flugzeugbau besitzen einen Doppelscheiben-Aufbau (Fail Save Aufbau), bei dem zwei Kabinenfensterscheiben einen Scheibenzwischenraum (Hohlraum) einschließen. Nach dieser Kabinenfenster-Lösung befindet sich an der Unterseite der Innenfensterscheibe eine Ventilationsbohrung (Ausgleichsbohrung), um im Scheibenzwischenraum während des Fluges, insbesondere beim Steig- und Sinkflug eines Passagierflugzeuges, einen Druckausgleich zu realisieren. Dabei findet über die Bohrung, bedingt durch das Druckgefälle zwischen dem Rumpfinneren (Kabinenraum) und dem Scheiben-Zwischenraum, ein Luftaustausch statt. Für den Fall, bei dem der Druck in der Kabine im Verhältnis zum Druck im Scheibenzwischenraum größer ist, kann Luft in den Hohlraum eintreten. Da die Außenfensterscheibe des Kabinenfensters in der Regel während des Fluges einer Temperatur von unter Minus dreißig Grad Celsius (-30°C) ausgesetzt ist, kondensieren selbst geringe Anteile an Wasserdampf in der Kabinenluft an der Innenseite der Außenfensterscheibe aus. Dabei ist die relative Luftfeuchtigkeit vom Flugzustand des Flugzeuges abhängig. Es reicht schon eine geringe Luftfeuchtigkeit aus, damit es im Fensterscheiben-Zwischenraum zur Taupunktunterschreitung kommt und der Wasserdampf dort aus der Luft auskondensiert. Galleybetrieb, Passagieranzahl, Flugdauer und Flugeinsatzgebiet besitzen eine wesentliche Rolle für den Anteil an Wasserdampf in der Kabinenluft. Ausgehend von der Wasserdampfabgabe der Passagiere und dem Wasserdampf vom Galleybetrieb während des Fluges sowie den herrschenden Luftverhältnissen bei Start und Landung eines Flugzeuges ist die an der Ventilationsbohrung anstehende Luft mit mehr oder weniger Wasserdampf beladen. Dabei gelangt die mit Wasserdampf beladene Kabinenluft über Schlitze und Verkleidungsstöße hinter die Kabinenfensterverkleidung in den Bereich eines Fenstertrichters an die Ventilationsbohrung. Durch den Druckwechsel in der Passagierkabine strömt die relativ feuchte Luft über die Ventilationsbohrung in den Fensterscheibenzwischenraum. Insbesondere, wenn die relative Luftfeuchtigkeit höher ist, beispielsweise bei größerer Auslastung des Passagierflugzeuges, kann es zum Beschlagen der Kabinenfensterscheibe kommen.

Infolge der niedrigen Außentemperaturen im Flug setzt außerdem an der Außenscheibe eine Eisbildung ein, da auf deren Innenseite eine sehr niedrige Oberflächentemperatur von etwa Minus zwanzig Grad Celsius (-20°C) liegt. Die tiefen Temperaturen im Scheibenzwischenraum führen dabei schon bei sehr geringen, absoluten Feuchten der Luft zur Wasserdampfkondensation an der Innenseite der Außenfensterscheibe. Das gilt insbesondere bei hoher Auslastung des Flugzeuges. Geht das Flugzeug in den Sinkflug über, taut die dünne Eisschicht beim Erreichen des Flugzeuges von wärmeren Luftschichten auf. Danach bildet sich Wasser, das zum Beschlagen der Fensterscheiben und im Extremfall zu seiner Ansammlung an der Unterseite des Scheibenzwischenraumes führt.

Aus der DE-PS 933 371 ist eine weitere Doppelscheiben-Anordnung für ein Flugzeugfenster bekannt, nach der der Scheibenzwischenraum durch eine unmittelbare Verbindung mit der Luft im Kabinenraum druckausgeglichen wird. Dabei ist eine mit einem(r) Trockenmittel(tablette) gefüllte (besetzte) Trockenpatrone, die in einer Öffnung der Innenscheibe der Doppelscheiben-Anordnung sitzt und an dieser befestigt ist, zur Absorption der Luftfeuchtigkeit zwischen den Doppelscheiben vorgesehen. Die Trockenpatrone weist einen Kanal auf, welcher die unmittelbare Verbindung des Scheibenzwischenraumes mit der Kabinenluft herstellt. Ein der Trockenpatrone vorgeschaltetes Ventil, das sich bei eintretenden Druckunterschieden öffnet und einen raschen Druckausgleich ermöglicht, soll den freien Zutritt feuchter Kabinenluft zur Trockenpatrone verhindern. Ungeachtet dessen, das die zusätzliche Installation der Trockenpatrone eine Gewichtszunahme des Flugzeuges bedeutet, unterliegt das Material des sich öffnenden Ventils, das mit einem - durch eine Gummischeibe oder dergleichen gebildeten - Spalt gebildet wird, der sich wie ein Lippenventil bei Druckunterschieden öffnet, einer gewissen Alterung bzw. Ermüdung. Das Gummimaterial wird (sehr rasch) verkleben, infolge dessen sich die Sichtverhältnisse einer derartigen Doppelscheiben-Anordnung drastisch vermindern und deswegen der Ersatzteilbedarf (wegen der Beseitigung derartiger Ventilstörungen) entsprechend hoch ausfallen wird.

Außerdem ist eine Doppelscheiben-Anordnung bekannt, bei der ein in den Fensterscheiben-Zwischenraum geführtes Adapterelement über einen ihm adaptierten Verbindungsschlauch mit dem Rumpfinneren (Kabinenraum) verbunden ist. Dabei ist dem nichtadaptierten Schlauchende des Verbindungsschlauches ein auf der Innenseite der metallenen Außenhaut befestigtes metallenes Zwangskondensationsrohr (Belüftungsrohr) angeschlossen, das mit dem Rumpfinneren kommuniziert.

Dabei nimmt das Zwangskondensationsrohr einen Teil der dem Rumpfinneren entweichenden relativ feuchten Kabinenluft bei einsetzendem Luftdruckausgleich zwischen dem Rumpfinneren und dem Fensterscheiben-Zwischenraum auf. Aufgrund von Druckunterschieden wird die relativ feuchte Luft durch das Zwangskondensationsrohr und den Verbindungsschlauch angesogen. Dabei wird der in der Luft enthaltene Wasserdampf im kalten Kondensationsrohr auskondensieren, dessen Querschnitt derart ausgelegt ist, daß bei der Vereisung des Kondensats genügend Strömungsquerschnitt frei bleibt, damit das Eis spätestens im Sinkflug taut und in Form von Wassertropfen abtropft.

Bei den bekannten Lösungen wird ein Beschlagen und Vereisen der Doppelscheiben-Kabinenfenster eines Flugzeuges entweder gar nicht verhindert oder nur mit der Installation von zusätzlichen Vorrichtungen zur Trocknung der relativ feuchten Luft durch Zwangskondensation erreicht. Die Installation nämlicher Zusatz-Vorrichtungen erfordert eine Erweiterung des Montage- und Wartungsaufwandes. Gleichermaßen wird eine Zunahme des Flugzeuggewichtes eintreffen. Damit werden auch Störstellen installiert, die sogar - bei Einsatz der Trockenpatrone mit vorgeschaltetem Ventil - bis zum Totalausfall der Sichtverhältnisse eines Doppelscheiben-Kabinenfensters führen können. Derartige Lösungen eignen sich allenfalls als Anpaßlösung für die gegenwärtig im Flugzeug eingerüsteten Kabinenfenster. Bei der Neuerstellung eines Passagierflugzeuges bedeuten jedoch diese Zusatzsysteme entsprechenden Material- und Montagemehraufwand, der zu reduzieren ist.

Demzufolge liegt der Erfindung die Aufgabe zugrunde, ein gattungsgemäßes Doppelscheiben-Kabinenfenster für ein Flugzeug derart zu verbessern, daß mit ihm - ohne zusätzlich Anbauteile und ohne Nutzung eines aktiven Druckregelsystems - ein Beschlagen und Vereisen der Kabinenfensterscheiben verhindert wird. Mit der Erfindung wird angestrebt, ohne zusätzliche Montage von Systemen und ohne wesentliche Veränderung der Flugzeugstruktur die gegenwärtig eingerüsteten Doppelscheiben-Kabinenfenster zu modifizieren.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel näher beschrieben. Es zeigen
- Fig. 1: ein gegenwärtig (im Passagier-Flugzeug) eingesetztes Doppelscheiben-Kabinenfenster mit einer im unteren Randbereich der Innenfensterscheibe befindlichen Ausgleichsbohrung (Belüfungsbohrung) und den vorgesehenen Modifikationen;
- Fig. 2: die Schnittsdarstellung A - A des Doppelscheiben-Kabinenfensters nach Fig. 1 mit detaillierter Darstellung eines Kondensationskanales im unteren Randbereich des Kabinenfensters;
- Fig. 3: die Schnittsdarstellung B - B des Doppelscheiben-Kabinenfensters nach Fig. 1 mit detaillierter Darstellung des Kondensationskanales im oberen Randbereich des Kabinenfensters.

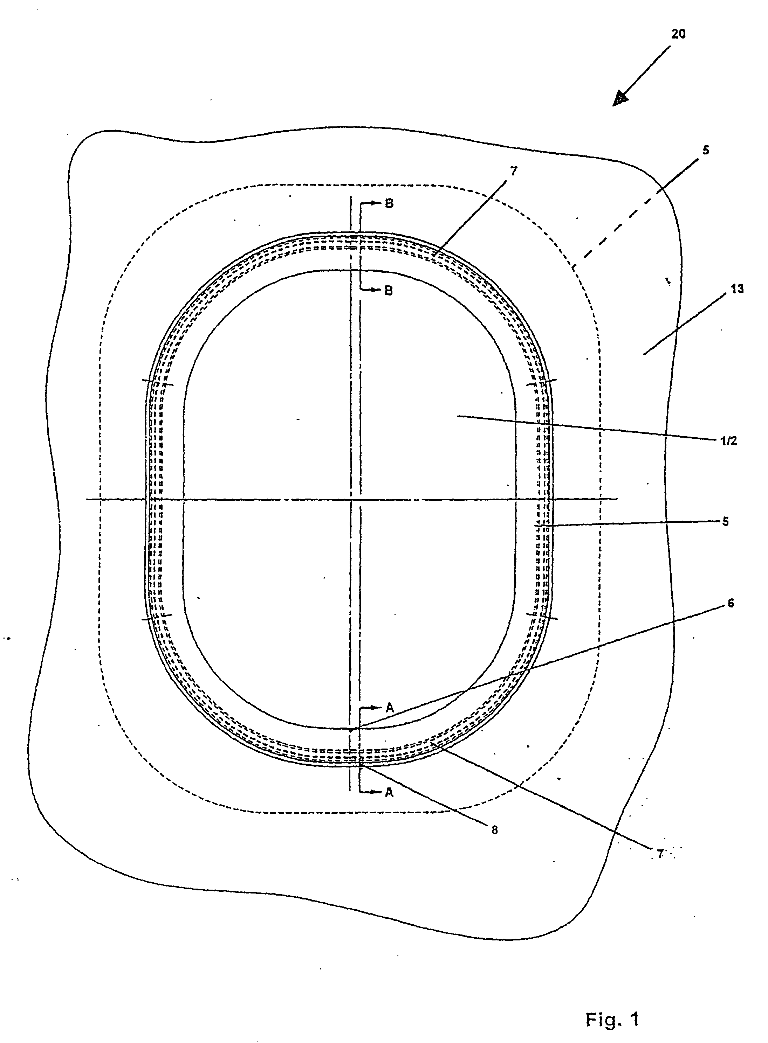

Die Lösung geht davon aus, daß der Doppelscheiben-Aufbau (Fail Save Aufbau) von gegenwärtig verwendeten Doppelscheiben-Kabinenfenstern 20 im Passagier-Flugzeugbau erhalten bleibt. In der Fig. 1 is der Doppelscheiben-Aufbau dieses bekannten Kabinenfensters in einer Vorderansicht dargestellt. Die Ansicht zeigt eine Anordnung der Innen- und Außenfensterscheibe 1, 2 innerhalb des Kabinenfensterrahmens 5. Der Kabinenfensterrahmen 5 selbst wird zum Teil von der Außenhaut 13 des Flugzeuges überdeckt. An der Unterseite des in der Fig. 1 dargestellten Doppelscheiben-Kabinenfensters 20 befindet sich eine Luftausgleichs- bzw. Belüftungsbohrung 6, welche den Druckausgleich zwischen dem (hier nicht erkennbaren) Fensterscheiben-Zwischenraum 3 und dem (nicht gezeigten) Rumpfinnenraum (Kabinenraum) des Flugzeuges ermöglicht. Über diese Belüftungsbohrung 6 (Luftausgleichsbohrung zur Belüftung) findet herkömmlich ein Luftaustausch statt, der die vorbeschriebenen Nachteile eintreten läßt.

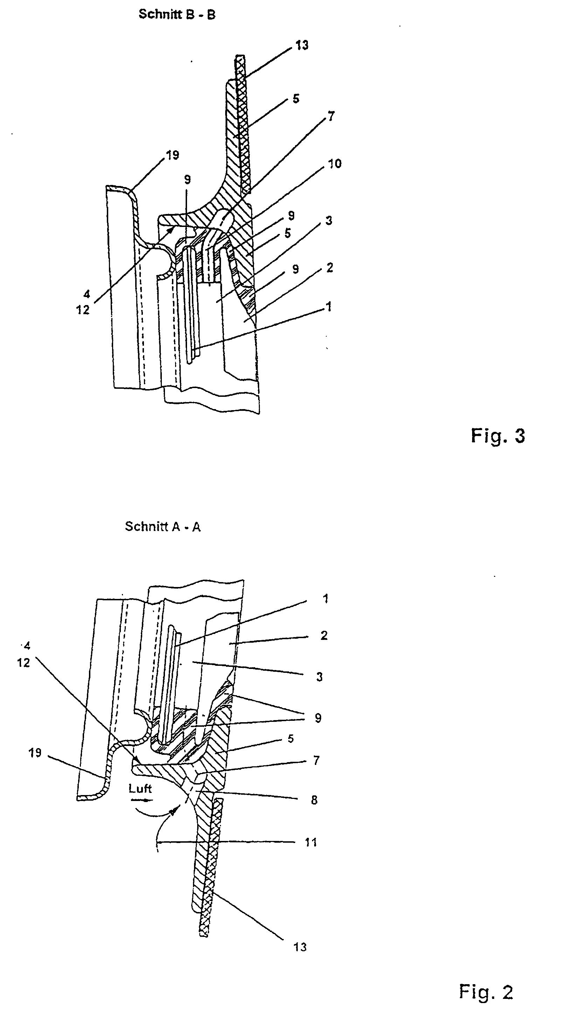

Ein beschlagfreies Doppelscheiben-Kabinenfenster 20 erhält man durch den Wegfall der Belüftungsbohrung 6 und durch die Realisierung zusätzlicher Maßnahmen, die in den Schnittdarstellungen A - A nach Fig. 2 und B - B nach Fig. 3 detaillierter gezeigt sind.

Die weiteren Ausführungen setzen voraus, daß die Kabinenfensterscheiben (Innen- und Außenfensterscheibe 1, 2) innerhalb des Kabinenfensterrahmens 5 mittels einer Fensterdichtung 9 fest und dicht sitzen. Dabei strömt aus dem Inneren des (bildlich nicht dargestellten) Flugzeug-Druckrumpfes - infolge des (vorerwähnten) stattfindenden Druckausgleiches zwischen dem Kabinenraum und dem Fensterscheiben-Zwischenraum 3 - relativ feuchte Luft 11 (Kabinenluft) in einen (dem Kabinenfenster-Aufbau zugehörenden) Kanal, der funktionell ein Kondensationskanal darstellt, auf den später näher eingegangen wird.

Frontal dem kabineninnenseitig (betrachtet) zugewandten Bereich der Fensterumrahmung des Doppelscheiben-Kabinenfensters 20 befindet sich ein Schenkelrahmen 4, der integrierter Bestandteil des Kabinenfensterrahmens 5 ist. Der Schenkelrahmen 4, der durch ein das Kabinenfenster geschlossenes (umrahmendes) Schenkelprofil mit einem (der Fensterumrahmung seitlich abstehenden) Schenkel 12 gebildet wird, ist der (hier: geschwungenen) Form (Gestalt) des Kabinenfensterrahmens 5 angepaßt, wobei der zum Kabineninneren gerichtete Schenkel 12 den seitlich abstehenden Teil der Fensterumrahmung, die aus dem Kabinenfensterrahmen 5 mit dem ihm integrierten Schenkelrahmen 4 besteht, darstellt. Die Integration geschieht derart, wonach entweder das Schenkelprofil des (metallenen) Schenkelrahmens 4 kabineninnenseitig an der Profilumrahmung des (metallenen) Kabinenfensterrahmens 5 befestigt (d. h. dem Kabinenfensterrahmen 5 fest aufgesetzt) ist oder der Schenkel- und der Kabinenfensterrahmen 4, 5 sind körpermäßig zu einem Rahmen (Ganzmetall-Rahmen) zusammengefaßt, dessen Schenkel 12 sich zum Kabineninneren erstreckt.

Der (ausgebildete) Kanal (selbst) verläuft über seine gesamte (Kanal-)Länge unmittelbar entlang einer dem Schenkel 12 ausgenommenen rillenartigen Vertiefung 7, die sich längsverlaufend der Schenkeloberfläche umfänglich und innerhalb dem (metallenen ausgeführten) Schenkelrahmen 4 erstreckt. Die rillenartige Vertiefung 7 ist längsverlaufend der Schenkeloberfläche in den Schenkel 12 eingelassen. Dabei wird der (sogenannte) Kondensationskanal durch die Abdeckung der Vertiefung 7 mit der Fensterdichtung 9, die dem innenliegenden Bereich des Schenkelrahmens 4 (soll heißen: der Oberfläche des Schenkels 12, die sich dem Doppelscheiben-Aufbau zuwendet) aufliegt, gebildet.

In der Fig. 1 wird außerdem die an der Stelle des gelegten Schnittes A - A vorgesehene Position des Lufteintritts in den Kanal und die an der Stelle des gelegten Schnittes B - B vorgesehene Position des Luftaustritts dieser (bereits am metallenen Schenkelrahmen 4 auskondensierten) Luft in den Fensterscheiben-Zwischenraum 3 gezeigt. Dazu wird bemerkt, daß diese Positionsangaben variieren können, wobei ein genügender Abstand dieser Belüftungsstellen einzuhalten ist.

Die Randbereiche des Doppelscheiben-Kabinenfensters 20 sind in den Figuren 2 und 3 datailliert veranschaulicht. Beide Darstellungen lassen erkennen, daß die Fensterdichtung 9 vollständig dicht und fest dem Kabinenfensterrahmen 5 aufliegt, wobei man deren Auflage auf dem horizontalen Abschnitt (incl. Übergangsbereich) der (dem Doppelscheiben-Aufbau zugewandten) inneren Oberfläche des Schenkelrahmens 4 gleichfalls erkennt.

In der Fig. 2, welche die Schnittsdarstellung A - A des Doppelscheiben-Kabinenfensters 20 nach der Fig. 1 - ohne Ventilationsbohrung - erkennen läßt, wird zusätzlich die Lage und der Querschnitt der rillenartigen Vertiefung 7, die dem Schenkel 12 (dem Schenkelprofil des Schenkelrahmens 4) eingelassen (ausgespart) ist, wiedergegeben. Diese Vertiefung 7, die (innerhalb und) umfänglich längsverlaufend der Oberfläche des Schenkels 12 - nahe dem befestigten Ende bzw. dem Integrationsbereich (Übergangsbereich) des Schenkels 12 - angeordnet ist, setzt an der Schenkeloberfläche (des Schenkelrahmen-Innenbereiches, der sich dem Doppelscheiben-Aufbau zuwendet,) ein und ist von dort aus (schräggeführt, soll heißen: nicht vertikal) dem Schenkelquerschnitt eingearbeitet. Gleichsam ist an der bewußten Stelle des Schnittes A - A eine erste Öffnung 8 (Luftausgleichs- bzw. Belüftungsbohrung) von außerhalb des Schenkelrahmens 4 eingelassen. Diese als Bohrung ausgeführte Öffnung setzt an der außenliegenden Schenkeloberfläche (des Schenkelrahmen-Außenbereiches, der sich dem Kabineninneren zuwendet,) ein und ist von dort aus (schrägverlaufend, soll heißen: nicht vertikal) durch den Schenkel 12 bis in den Querschnitt der Vertiefung 7 geführt. Durch die (umfängliche) Auflage der Fensterdichtung 9 auf der inneren Schenkeloberfläche des Schenkelrahmens 4 wird damit gleichfalls die eingelassene Vertiefung 7 abgedeckt. Sie trägt damit zur Ausbildung eines geschlossenen Kanals bei, der umfänglich dem Kabinenfensterrahmen 5 angeordnet ist.

Aufgrund der Tatsache, daß während des Druckausgleiches die relativ feuchte Luft 11 an der Stelle des Schnittes A - A (unterhalb des Doppelscheiben-Aufbaus) dort der ersten Öffnung 8, die als Durchgangsloch ausgeführt ist, einströmen wird, die dann im Kanal bis an die Stelle des Schnittes B -B (nach der Fig. 1) aufsteigen wird und gleichsam am metallenen Schenkelrahmen 4, der die auf der Außenhaut 13 des Flugzeuges aufliegende kalte Außentemperatur besitzt, auskondensieren wird, stellt der rillenausgeführte Kanal funktionell einen Kondensationskanal dar.

In der Fig. 3, welche die Schnittsdarstellung B - B des Doppelscheiben-Kabinenfensters 20 nach der Fig. 1 - ohne Ventilationsbohrung - erkennen läßt, wird weiterhin die Lage und der Querschnitt der rillenartigen Vertiefung 7, die gleicherart innerhalb dem Schenkel 12 (dem Schenkelprofil des Schenkelrahmens 4) eingelassen (ausgespart) ist, wiedergegeben. Aus der Fig. 3 ist anschwer die gleichartige Ausführung der Vertiefung 7 nach dem Vorbild der Fig. 2 erkennbar. Zusätzlich wird an dieser Stelle des Schnittes B -B (oberhalb des Doppelscheiben-Aufbaus) durch die Fensterdichtung 9 eine zweite Öffnung 10 geführt, die günstigerweise als Durchgangsloch ausgeführt ist. Sie setzt an der (innenliegenden) Dichtungsoberfläche mittig dem Fensterscheiben-Zwischenraum 3 ein, deren vertikaler Verlauf in einen schrägen (soll heißen: nicht vertikalen) Verlauf überwechselt, die bis in den Querschnitt des Kanals mündet. Dadurch wird der Lufteintritt der (rechts- und / oder linksseitig) im Kanal aufgestiegenen Luft 11 bzw. der Luftaustritt der aus dem Fensterscheiben-Zwischenraum 3 (in umgekehrter Richtung) retour geleiteten Luft 11 gewährleistet. Deshalb stellt die zweite Öffnung 10 funktionell eine (sogenannte) Luftein- und - auslaßbohrung dar.

Der Vollständigkeit halber wird ergänzt, daß außerdem ein am Schenkel(profil) 12 des Schenkelrahmens 4 (in geeigneter Art und Weise) befestigter Andruckrahmen 19 am (fensterinnenseitig sichtbaren) Umfangsbereich der Fensterdichtung 9 andrückt, wobei die Andruckelemente-Auflagefläche des Andruckrahmens 19 horizontal fest gegen den (fensterinnenseitig freiliegenden) Bereich der Fensterdichtung 9 (- zumindestens abschnittsweise -) drückt, um die Scheibenlage und den Abdichtbereich der Doppelscheiben-Anordnung zu stabilisieren.

Es sollte ferner beachtet werden, daß immer wenigstens ein außenliegender Teilbereich des Schenkels 12 außerhalb des Schenkelrahmens 4 von mindestens einer ersten Öffnung 8 und gleichso die Fensterdichtung 9 mindestens von einer zweiten Öffnung 10 durchdrungen ist. Dabei ist zu beachten, daß die beiden Öffnungen 8, 10 stets an zueinander entfernten Stellen positioniert sind. Außerdem wäre zu beachten, daß der Strömungsquerschnitt der zweiten Öffnung 10 größer dem Strömungsquerschnitt der ersten Öffnung 8 ist oder zumindestens beide Öffnungen 8, 10 annähernd den gleichen Strömungsquerschnitt besitzen.

Abschließend läßt sich zusammenfassen, daß im Vergleich der herkömmlich eingesetzten Doppelscheiben-Kabinenfenster eines Flugzeuges mit dem beispielgemäßen Kabinenfenster letzterem ein (sogenannter) Kondensationskanal (geschlossener Kanal) integriert wird. Dabei wird der mit einer rillenartigen Vertiefung 7 realisierte Kanal durch die Anordnung der Fensterdichtung 9 (als Kanaldichtung) auf der Schenkeloberfläche des metallenen Kabinenfensterrahmen 5 (genauer: durch die Abdeckung der dem Schenkel 12 des Schenkelrahmens 4 [als integrierter Bestandteil des Kabinenfensterrahmens 5] eingelassenen Vertiefung 7) gebildet. Mit dem Entfallen der üblicherweise bisher eingesetzten Ventilationsbohrung 6 (Belüftungsbohrung am unteren Scheibenrand der Innenfensterscheibe 1) wird stattdessen an der Unterseite des Schenkels 12 (des Schenkelrahmens 4) eine erste Öffnung 8 (eine Luftausgleichsbohrung) mit Luftverbindung zur Vertiefung 7 (zum Kanal) installiert. Außerdem wird oberhalb des Doppelscheiben-Kabinenfensters 20 an der Oberseite der Fensterdichtung 9 eine zweite Öffnung 10 (eine Luftein- und auslaßöffnung) mit Luftverbindung zum Fensterscheiben-Zwischenraum 3 (des Doppelscheiben-Kabinenfensters 20) installiert. Damit sich kein Wasserdampf an der (dem Hohlraum des Fensterscheiben-Zwischenraumes 3 zugewandten) Innenseite der Außenfensterscheibe 2, wie nach der herkömmlichen Lösung unvermeidbar, absetzt, wird - während des Druckausgleiches - die Wasserdampfkondensation der relativ feuchten Luft 11 durch deren Einleitung über die erste Öffnung 8 (Luftausgleichsbohrung) bereits im (rillenartigen) Kanal geschehen. Dabei erfolgt die Belüftung des Fensterscheiben-Zwischenraumes 3 mittels der im Kanal (in der rillenartigen Vertiefung 7) auskondensierten und dadurch getrockneten Luft 11, die über die zweite Öffnung 10 (Luftein- und -auslaßbohrung) in den Hohlraum zwischen der Innen - und Außenfensterscheibe 1, 2 strömt.

Bei der Belüftung des beschriebenen Doppelscheiben-Kabinenfensters 20 werden folgende Wirkungen auftreten:

Ein Großteil der Luftfeuchtigkeit wird auf dem Luftströmungsweg zur zweiten Öffnung 10 im Kanal auskondensieren, nachdem die relativ feuchte Luft 11 bei vorhandenen Druckunterschieden von der ersten Öffnung 8 in den Kanal (in den Querschnitt der rillenartigen Vertiefung 7) einströmte. Das wird dadurch möglich, weil die Wandung der Vertiefung 7, deren offener Bereich von der Fensterdichtung 9 abgedeckt wird und somit einen geschlossenen Kanal ausbildet, die niedrige Temperatur des metallenen Schenkelrahmens 4 (als Bestandteil des metallenen Kabinenfensterrahmen 5) aufweisen wird, der aufgrund seiner besseren Wärmeleitfähigkeit während des Fluges eine tiefere Temperatur als die (dem Hohlraum zugewandte) Innenseite der Außenfensterscheibe 2 einnimmt. Das Auskondensieren der Luftfeuchtigkeit der Luft 11 findet somit überwiegend an der Wandung der Vertiefung 7 - also im Kanal - (und nicht - im Vergleich der bemängelten herkömmlichen Lösung - im Fensterscheiben-Zwischenraum 3) statt.

Aufgrund der relativ geringen Druckunterschiede und des langsamen Sinkfluges erfolgt der Druckausgleich ebenfalls nur sehr langsam, so daß die relativ feuchte Luft 11 ausreichend Zeit hat, an der kalten Wandung der Vertiefung 7 (des Kondensationskanals) auszukondensieren. Dieser Vorgang findet hauptsächlich während des Landevorganges des Flugzeuges statt. Weil während der Landephase des Flugzeuges mit abnehmender Reisflughöhe die Temperatur der Außenhaut 13 und (auch aufgrund ihrer mechanischen und wärmeleitfähigen Verbindung) damit auch die des Kabinenfensterrahmens 5 (des Schenkelrahmens 4) - bis zur Überschreitung der Taupunkttemperatur - anwächst (zunimmt), wird es nicht mehr (oder kaum) zur Kondensation im Kondensationskanal kommen. Für den weiteren Druckausgleich im Verlauf des letzten Abschnittes der Landephase des Flugzeuges dient der Kondensationskanal als Trockenluft-Vorrat. Dadurch wird sichergestellt, daß bis zur Landung des Flugzeuges keine relativ feuchte Luft 11 mehr angesaugt werden kann.

Während sich das Flugzeug am Boden in wärmeren Luftschichten befindet, werden die gering gebildeten Eismengen, die sonst (nach der bemängelten herkömmlichen Lösung) zum Vereisen oder Beschlagen der (dem Hohlraum zugewandten) Scheibeninnenflächen des Doppelscheiben-Kabinenfensters 20 geführt haben, auftauen und in Gestalt von im Kanal (im Querschnitt der Vertiefung 7) gebildetem Kondenswasser über die (im unteren Kabinen-Fensterbereich befindliche) erste Öffnung 8 abtropfen.

Bei Verwendung des Doppelscheiben-Kabinenfenster 20 erfolgt der Luftdruckausgleich ohne Zusatzinstallation eines aktiven Druckregelsystems, das dann dem Fensterscheiben-Zwischenraum 3 anzuschließen wäre. Ungeachtet dessen, daß damit eine Gewichtszunahme eintreten würde, wäre eine derartige Lösung nicht nur technisch aufwendiger und kostenintensiver zu realisieren, auch der Energieverbrauch und der Wartungsaufwand würden anwachsen. Mit dem angegebenen Doppelscheiben-Kabinenfenster wird trotzdem gewährleistet, daß der Fensterscheiben-Zwischenraum 3 - während des Fluges - mit getrockneter Luft 14 belüftet wird. Eine Modifikation von gegenwärtig im Flugzeug eingerüsteten Doppelscheiben-Kabinenfenstern mit dem vorgestellten Kanal (Kondensationskanal) läßt sich durch einfache Montage ohne zusätzliche Anbauteile und ohne Veränderung der Flugzeugstruktur fertigungstechnisch leicht realisieren. Der Gebrauch der vorgestellten Doppelscheiben-Kabinenfenster-Lösung als Anpaßlösung für im Service befindliche Flugzeuge läßt sich durch einfaches Auswechseln des Doppelscheiben-Sets erledigen. Letztlich wird kein Anwachsen des Flugzeuggewichtes und des Wartungs- und Energieverbrauches eintreten, wobei der Passagierkomforts infolge der störungsfreien Sichtverhältnisse verbessert wird.

Mit den vorgestellten Maßnahmen werden letztendlich während des Fluges beschlagfreie Doppelscheiben-Kabinenfenster erzielt, wodurch der Passagierkomfort verbessert wird.

## Patentansprüche

1. Doppelscheiben-Kabinenfenster für ein Flugzeug, bei dem ein Fensterscheiben-Zwischenraum (3) durch eine Fensterdichtung (9) begrenzt ist und ein Schenkelrahmen (4) mit seitlich abstehendem Schenkel (12) integrierter Bestandteil des Kabinenfensterrahmens (5) ist, innerhalb dem die Fensterdichtung (9) mit aufliegt,
**dadurch gekennzeichnet,daß** der Schenkel (12) mit einer rillenartigen Vertiefung (7) ausgestattet ist, die umfänglich und innerhalb dem Schenkelrahmen (4) längsverlaufend der Schenkeloberfläche in den Schenkel (12) eingelassen ist und die mit der Fensterdichtung (9) abgedeckt zu einem geschlossenen Kanal ausgebildet ist.

2. Doppelscheiben-Kabinenfenster nach Anspruch 1,
**dadurch gekennzeichnet, daß** wenigstens ein außenliegender Teilbereich des Schenkels (12) außerhalb des Schenkelrahmens (4) von mindestens einer ersten Öffnung (8) durchdrungen ist und die Fensterdichtung (9) mindestens von einer zweiten Öffnung (10) durchdrungen ist, wobei die beiden Öffnungen (8, 10) an zueinander entfernten Stellen positioniert sind.

3. Doppelscheiben-Kabinenfenster nach Anspruch 1,
**dadurch gekennzeichnet,daß** mit der ersten Öffnung (8) eine von außerhalb dem Schenkelrahmen (4) in die Vertiefung (7) geführte Luftverbindung realisiert ist, durch welche die aus dem Inneren eines Flugzeug-Druckrumpfes entweichende Luft (11) in die Vertiefung (7) eindringt oder umgekehrt, und daß mit der zweiten Öffnung (10) eine von der Vertiefung (7) in den Fensterscheiben-Zwischenraum (3) geführte weitere Luftverbindung realisiert ist, durch welche die über die Vertiefung (7) strömende und am Kabinenfensterrahmen (5) auskondensierende Luft (11) in den Fensterscheiben-Zwischenraum (3) eindringt oder umgekehrt.

4. Doppelscheiben-Kabinenfenster nach Anspruch 2,
**dadurch gekennzeichnet,daß** die beiden Öffnungen (8, 10) jeweils durch Bohrungen realisiert sind, wobei der Strömungsquerschnitt der zweiten Öffnung (10) größer dem Strömungsquerschnitt der ersten Öffnung (8) ist oder beide Öffnungen (8, 10) zumindestens annähernd den gleichen Strömungsquerschnitt besitzen.

## Claims

1. Double-pane cabin window for an aircraft, in which a space (3) between the window panes is limited by a window seal (9) and a flanged frame (4) with laterally protruding flanges (12) constitutes an integrated component of the cabin window frame (5) inside which the window seal (9) is also supported,
**characterised in that** the flange (12) is equipped with a groove-like depression (7) which is let into the said flange (12) peripherally and inside the flanged frame (4) in a manner extending along the surface of the flange, and which is constructed, in a manner covered by the window seal (9), to form a closed duct.

2. Double-pane cabin window according to claim 1,
**characterised in that** at least one externally located partial region of the flange (12) is penetrated, outside the flanged frame (4), by at least one first aperture (8), and the window seal (9) is penetrated at least by a second aperture (10), the two apertures (8, 10) being positioned at points remote from one another.

3. Double-pane cabin window according to claim 1,
**characterised in that** there is produced, with the aid of the first aperture (8), an air connection which is routed into the depression (7) from outside the flanged frame (4) and through which the air (11) escaping from the interior of a pressurised aircraft fuselage penetrates into the depression (7) or *vice versa,* and that there is produced, with the aid of the second aperture (10), a further air connection which is routed from the depression (7) into the space (3) between the window panes, and through which the air (11) flowing via the depression (7) and condensing-out on the cabin window frame (5) penetrates into the space (3) between the window panes or *vice versa.*

4. Double-pane cabin window according to claim 2,
**characterised in that** the two apertures (8, 10) are each produced by bores, the cross-section of flow of the second aperture (10) being greater than the cross-section of flow of the first aperture (8), or the two apertures (8, 10) possessing at least approximately the same cross-section of flow.

## Revendications

1. Fenêtre à double vitrage pour la cabine d'un aéronef, un espace intermédiaire (3) entre les vitres de la fenêtre étant délimité par une garniture de fenêtre (9) et un encadrement (4) à traverse (12) décollée sur les côtés faisant partie intégrante du châssis de fenêtre (5) de la cabine, à l'intérieur duquel figure également la garniture de fenêtre (9),
et **caractérisée en ce que** la traverse (12) est dotée d'un enfoncement (7) strié périphérique, pratiqué à l'intérieur de l'encadrement (4), et s'étendant longitudinalement par rapport à la surface de la traverse, l'enfoncement étant également recouvert par la garniture de fenêtre (9) pour former un canal fermé.

2. Fenêtre à double vitrage pour la cabine d'un aéronef selon la revendication 1,
**caractérisée en ce que** au moins un segment partiel externe de la traverse (12) est traversé, à l'extérieur de l'encadrement (4), par au moins une première ouverture (8) et **en ce que** la garniture de fenêtre (9) est traversée par au moins une seconde ouverture (10), les deux ouvertures (8, 10) étant distantes l'une de l'autre.

3. Fenêtre à double vitrage pour la cabine d'un aéronef selon la revendication 1,
**caractérisée en ce que** une liaison atmosphérique guidée dans l'enfoncement (7) de l'extérieur de l'encadrement (4) et via laquelle l'air (11) s'échappant de l'intérieur d'un fuselage pressurisé d'aéronef pénètre dans l'enfoncement (7) ou inversement a été réalisée avec la première ouverture (8), et **en ce que** une autre liaison atmosphérique guidée dans l'espace (3) entre les vitres de la fenêtre, à partir de l'enfoncement (7), a été réalisée, l'air (11) qui s'échappe via l'enfoncement (7) et se condense contre le châssis de fenêtre de la cabine (5) pénétrant, grâce à la dite liaison, dans l'espace intermédiaire entre les vitres de la fenêtre, ou inversement.

4. Fenêtre à double vitrage pour la cabine d'un aéronef selon la revendication 2,
**caractérisée en ce que** les deux ouvertures (8, 10) ont été pratiquées par alésage, la section de passage de la seconde ouverture (10) étant plus grande que la section de passage de la première ouverture (8) ou les deux ouvertures (8, 10) présentant une section de passage identique ou presque.
